# EUROPÄISCHE PATENTSCHRIFT

(11) **EP 0 666 871 B1**
(45) Veröffentlichungstag und Bekanntmachung des Hinweises auf die Patenterteilung: **02.09.1998**
(21) Anmeldenummer: 95909567.0
(22) Anmeldetag: 28.06.1994
(51) Int. Cl.: C08B 30/04

(54) **VERFAHREN ZUR ZENTRIFUGALEN BEHANDLUNG EINER STÄRKEHALTIGEN SUSPENSION**
PROCESS FOR THE CENTRIFUGAL TREATMENT OF A SUSPENSION CONTAINING STARCH
PROCEDE POUR LE TRAITEMENT PAR CENTRIFUGATION D'UNE SUSPENSION RENFERMANT DE L'AMIDON

(30) Priorität: 30.08.1993 DE 4329111
(43) Veröffentlichungstag der Anmeldung: 16.08.1995
(73) Patentinhaber: Westfalia Separator AG, 59302 Oelde (DE)
(72) Erfinder: KUNZ, Herbert, D-49082 Osnabrück (DE)
(74) Vertreter: Stracke, Alexander, Dipl.-Ing.
(86) Internationale Anmeldenummer: DE9400755
(87) Internationale Veröffentlichungsnummer: WO9506667

(56) Entgegenhaltungen:
- EP-A- 0 506 233
- DE-A- 2 323 248
- US-A- 2 478 992
- US-A- 3 756 854
- US-A- 4 207 118

## Beschreibung

Die Erfindung bezieht sich auf ein Verfahren zur zentrifugalen Behandlung einer stärkehaltigen Suspension, die zusätzlich gelöste und ungelöste Stoffe beinhaltet, wobei in einer Zentrifuge unter Zugabe von Waschflüssigkeit eine Trennung der Suspension in ein stärkereiches Konzentrat und eine stärkearme Fraktion erfolgt.

Ein derartiges Verfahren ist beispielsweise aus der DE 23 23 248 C3 bekannt. Die stärkehaltige Suspension wird dabei durch Aufschluß pflanzlicher Rohstoffe gewonnen, wie z. B. Kartoffeln, Tapioka, Weizen und Mais. Es wird angestrebt, mit minimalen Aufwand an Maschinen, Energie, Betriebs- und Hilfsstoffen eine reine Stärke zu erhalten. Die in der Suspension enthaltenen gelösten und ungelösten Stoffe müssen von der Stärke getrennt und als Byprodukte gewonnen oder als Abwasser abgeführt werden. Dazu sind entsprechende Verfahren entwickelt worden, die sehr kostenintensiv sind.

Bei dem bekannten Verfahren wird die stärkehaltige Suspension unter Zugabe von Waschflüssigkeit in einer mehrstufigen Zentrifugenstation in ein reines Stärkekonzentrat und eine Flüssigkeitsphase aufgetrennt, die überwiegend die gelösten und ungelösten Stoffe enthält. Die Waschflüssigkeit wird dabei vorzugsweise im Gegenstrom geführt, d. h. sie wird der letzten Zentrifugenstufe zugeführt und die abgetrennte Flüssigkeitsphase wird der jeweils vorhergehenden Zentrifugenstufe als Waschflüssigkeit zugeführt. Die Flüssigkeitsphase reichert sich dabei mit gelösten und ungelösten Stoffen an und wird aus der ersten Zentrifugenstation abgezogen zur weiteren Behandlung. Zur Erhöhung der Effektivität des Waschvorganges können die Zentrifugen mit einer Wascheinrichtung versehen sein, durch die die Waschflüssigkeit unmittelbar in das sich noch in der Zentrifuge befindliche Stärkekonzentrat geleitet wird.

Der Erfindung liegt die Aufgabe zugrunde, ein Verfahren zu schaffen, mit dem die Effektivität des Waschvorganges erhöht und die Kosten für die Aufarbeitung der Flüssigkeitsphase verringert werden.

Diese Aufgabe wird dadurch gelöst, daß die stärkearme Fraktion in der Zentrifuge aufgeteilt wird in eine erste, überwiegend gelöste Stoffe enthaltende Flüssigkeitsphase, und eine zweite, überwiegend ungelöste Stoffe enthaltende Flüssigkeitsphase. wobei die erste Flüssigkeitsphase als Waschflüssigkeit einer vorgeschalteten Zentrifuge zugeleitet wird.

Da die erste Flüssigkeitsphase keine oder wenige hinderliche ungelöste Stoffe enthält, eignet sie sich besonders als Waschflüssigkeit, weil dadurch die Effektivität des Waschvorganges verbessert wird. Auch die Entsorgung dieser Flüssigkeitsphase nach Durchführung des Waschvorganges gestaltet sich wegen der nicht vorhandenen ungelösten Stoffe wesentlich einfacher.
Die zweite Flüssigkeitsphase mit den ungelösten Stoffen, wie z. B. Fasern, Zellfragmenten, Glutenpartikeln und Schleimstoffen, fällt mit höherer Konzentration als bei dem bekannten Verfahren an, da der Anteil der ersten Flüssigkeitsphase wegfällt. Dadurch ist ein geringerer Aufwand an Energie und Apparatetechnik zur Aufarbeitung dieser Phase erforderlich.

Vorteilhafte Ausgestaltungen der Erfindung sind in den Unteransprüchen wiedergegeben.

Zur Durchführung des Verfahrens ist eine Zentrifuge geeignet, die eine Klassierung der in der Suspension enthaltenden Feststoffe und deren getrennte Ableitung aus der Zentrifuge ermöglicht. Eine derartige Zentrifuge ist beispielsweise beschrieben in der nicht vorveröffentlichten DE-P 43 22 415.6. Es eignen sich aber auch andere Trennapparate zur Durchführung des Verfahrens, wie z. B. Zyklone.

Ausführungsbeispiele der Erfindung sind in der Zeichnung schematisch dargestellt und werden nachstehend näher erläutert. Es zeigt
- Fig. 1: eine einstufige Zentrifugalbehandlung,
- Fig. 2: eine zweistufige Zentrifugalbehandlung,
- Fig. 3: eine dreistufige Zentrifugalbehandlung,
- Fig. 4: eine Zentrifuge zur Durchführung des Verfahrens.

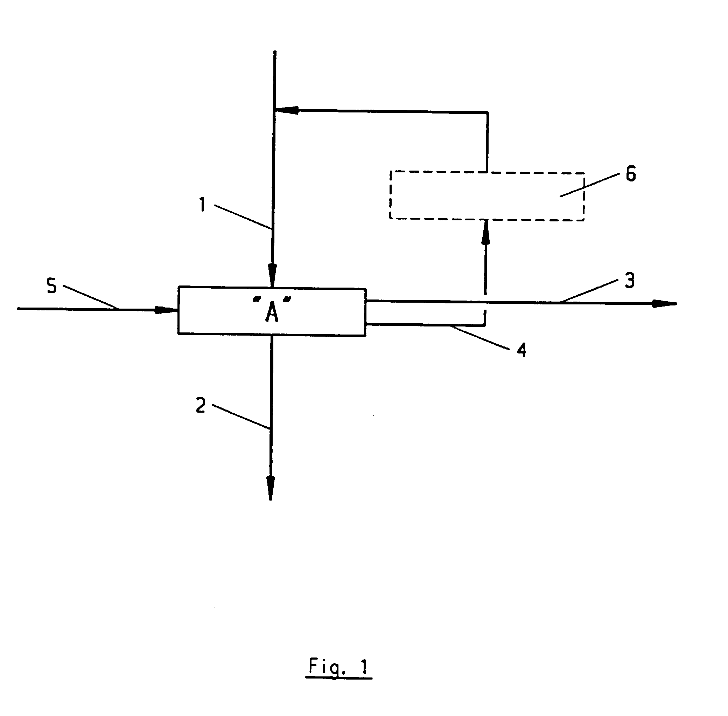

Mit "A" ist in der Fig. 1 die Zentrifuge bezeichnet, in der eine stärkehaltige Suspension 1 aufgetrennt wird in ein stärkereiches Konzentrat 2, eine erste, die gelösten Stoffe enthaltende Flüssigkeitsphase 3 und eine zweite, die ungelösten Stoffe enthaltende Flüssigkeitsphase 4. über eine nicht dargestellte Wascheinrichtung wird Waschflüssigkeit 5 in die Zentrifuge "A" geleitet, die gelöste und ungelöste Stoffe aus der Stärke herauswäscht und anschließend in die beiden Flüssigkeitsphasen 3 und 4 aufgetrennt wird. Die zweite Flüssigkeitsphase 4 kann nach Abtrennung der ungelösten Stoffe mittels Sieb 6 mit der stärkehaltigen Suspension 1 vermischt in die Zentrifuge "A" zurückgeführt werden.

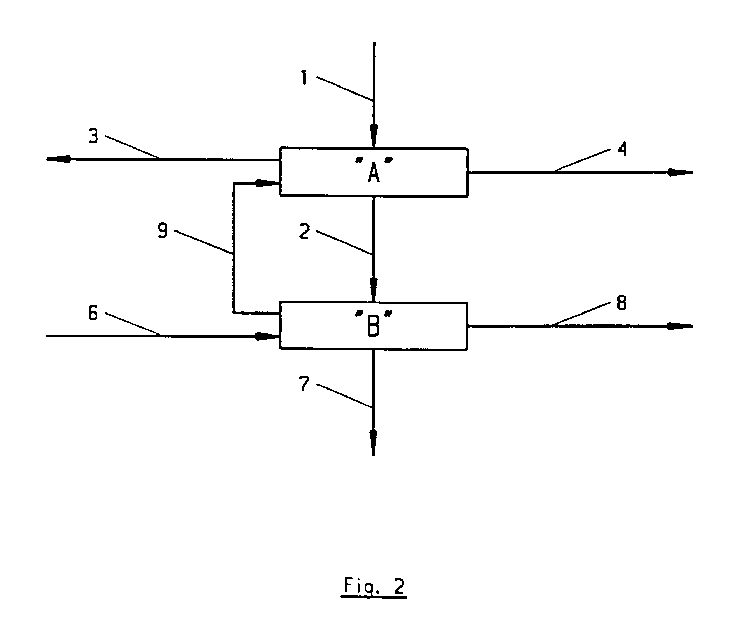

In der Fig. 2 ist außer der Zentrifuge "A" eine weitere Zentrifuge "B" dargestellt. Die stärkehaltige Suspension 1 wird wie zuvor in eine erste Flüssigkeitsphase 3 und eine zweite Flüssigkeitsphase 4 aufgetrennt, die einer weiteren Behandlung zugeführt werden können. Das aus der Zentrifuge "A" auflaufende stärkehaltige Konzentrat 2 wird in der Zentrifuge "B" bei gleichzeitiger Zugabe von Waschflüssigkeit 6 aufgetrennt in stärkehaltiges Konzentrat 7, eine zweite Flüssigkeitsphase 8 und eine erste Flüssigkeitsphase 9, die als Waschflüssigkeit in die Zentrifuge "A" geleitet wird.

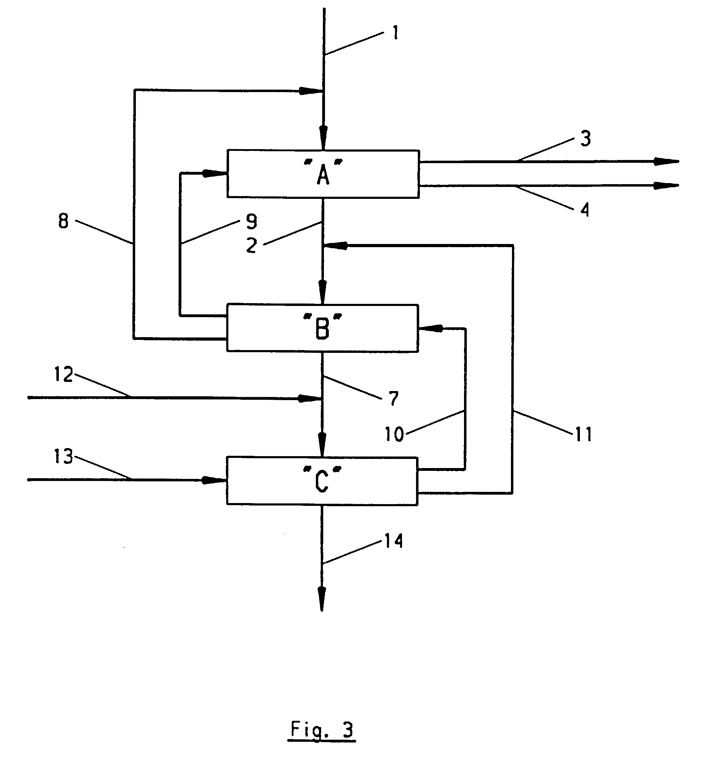

Bei dem Verfahren gemäß Fig. 3 sind drei Zentrifugen "A", "B" und "C" vorgesehen. Die stärkehaltige Suspension 1 wird in der Zentrifuge "A" in stärkehaltiges Konzentrat 2, eine erste Flüssigkeitsphase 3 und eine zweite Flüssigkeitsphase 4 aufgetrennt. Als Waschflüssigkeit dient in der ersten Zentrifuge "A" die erste Flüssigkeitsphase 9 und die zweite Flüssigkeitsphase 8, die beide aus der Zentrifuge "B" abgeleitet werden. Die erste Flüssigkeitsphase 9 wird über eine Wascheinrichtung und die zweite Flüssigkeitsphase 8 zusammen mit der stärkehaltigen Suspension 1 in die Zentrifuge "A" geleitet. Das stärkehaltige Konzentrat 2 wird in der Zentrifuge "B" aufgetrennt in die beiden Flüssigkeitsphasen 8, 9 und stärkehaltiges Konzentrat 7. Als Waschflüssigkeit dient in der zweiten Zentrifuge "B" die aus der Zentrifuge "C" abgeleiteten Flüssigkeitsphasen 10 und 11, die teilweise mit dem stärkehaltigen Konzentrat 2 vermischt und teilweise über eine Wascheinrichtung zugeführt werden. Das aus der Zentrifuge "B" ablaufende stärkehaltige Konzentrat 7 wird mit Frischwasser 12 vermischt der Zentrifuge "C" zugeführt, der über eine Wascheinrichtung weiteres Frischwassers 13 zugegeben wird. Die gereinigte Stärke 14 wird aus der Zentrifuge "C" abgeleitet.

Bei den Verfahren gemäß den Figuren 1, 2 und 3 fallen die gelösten und ungelösten Feststoffe in getrennten Prozeßströmen an. Dadurch wird ihre weitere Verwertung oder Entsorgung erheblich vereinfacht. Die entsprechenden Verfahren zur Nachbehandlung dieser Medien lassen sich dadurch erheblich kostengünstiger gestalten.

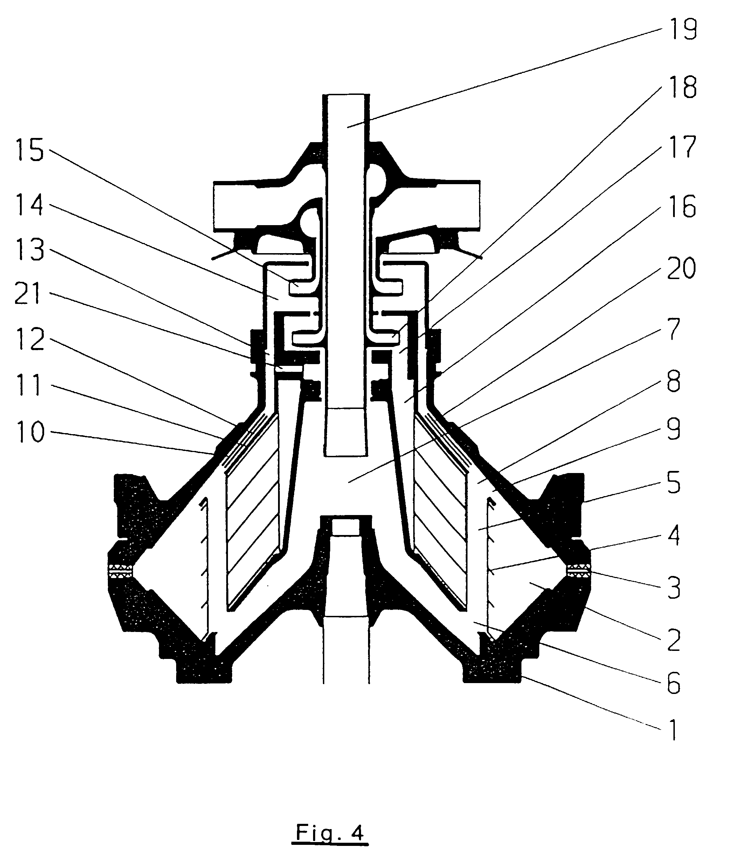

Bei der Durchführung des Verfahrens mit einer Schleudertrommel 1 gemäß Fig. 4 wird die stärkehaltige Suspension über ein Zulaufrohr 19 in einen Einlaufraum 7 eingespeist und gelangt über Eintrittsöffnungen 6 in Steigekanäle 5 eines Tellereinsatzes 4. Das im Tellereinsatz 4 abgeschiedene stärkehaltige Konzentrat wird im Feststoffraum 2 aufgefangen, bevor es über Düsen 3 ausgetragen wird. Die erste Flüssigkeitsphase mit den gelösten Stoffen wird über Kanäle 16 und ein Schälorgan 18 aus der Schleudertrommel 1 abgeleitet. Der Querschnitt der Düsen 3 ist so bemessen, daß vorwiegend das Stärkekonzentrat abgelassen wird und die übrigen ungelösten Stoffe dadurch radial einwärts in die Steigekanäle 5 verdrängt werden. Diese ungelösten Stoffe werden mit der zweiten Flüssigkeitsphase über Austrittsöffnungen 8 und Verbindungskanäle 13 in eine Schälkammer 14 geleitet und mittels Schälorgan 15 abgezogen. Durch diesen Klassiereffekt können zwei Feststoffarten getrennt aus der Schleudertrommel abgeleitet werden.

## Patentansprüche

1. Verfahren zur zentrifugalen Behandlung einer stärkehaltigen Suspension, die zusätzlich gelöste und ungelöste Stoffe beinhaltet, wobei in einer Zentrifuge unter Zugabe von Waschflüssigkeit eine Trennung der Suspension in ein stärkereiches Konzentrat und eine stärkarme Fraktion erfolgt, **dadurch gekennzeichnet**, daß die stärkearme Fraktion in der Zentrifuge aufgeteilt wird in eine erste, gelöste Stoffe enthaltende Flüssigkeitsphase, und eine zweite, ungelöste Stoffe enthaltende Flüssigkeitsphase, wobei die erste Flüssigkeitsphase als Waschflüssigkeit einer vorgeschalteten Zentrifuge zugeleitet wird.

2. Verfahren nach Anspruch 1, dadurch gekennzeichnet, daß die aus der vorgeschalteten Zentrifuge ablaufende erste Flüssigkeitsphase einer weiteren vorgeschalteten Zentrifuge zugeleitet wird.

3. Verfahren nach Anspruch 1 oder 2, dadurch gekennzeichnet, daß weitere Zentrifugen vorgesehen sind, durch die die erste Flüssigkeitsphase im Gegenstrom als Waschflüssigkeit geleitet wird.

4. Verfahren nach einem der Ansprüche 1 bis 3, dadurch gekennzeichnet, daß auch die zweite Flüssigkeitsphase als Waschflüssigkeit im Gegenstrom durch die Zentrifugen geleitet wird.

5. Verfahren nach einem der Ansprüche 1 bis 4, dadurch gekennzeichnet, daß die zweite Flüssigkeitsphase jeweils in einen Zulauf der vorgeschalteten Zentrifuge und die erste Flüssigkeitsphase in eine Wascheinrichtung dieser Zentrifuge geleitet wird.

6. Verfahren nach einem der Ansprüche 1 bis 3, dadurch gekennzeichnet, daß die zweite Flüssigkeitsphase nach Abscheidung der ungelösten Stoffe mittels einer Trennvorrichtung in die Zentrifuge zurückgeführt wird.

## Claims

1. A process for the centrifugal treatment of a starch-bearing suspension which additionally contains dissolved and undissolved substances, wherein separation of the suspension into a starch-rich concentrate and a starch-deficient fraction is effected in a centrifuge with the addition of washing liquid characterised in that the starch-deficient fraction is divided in the centrifuge into a first liquid phase containing dissolved substances and a second liquid phase containing undissolved substances, wherein the first liquid phase is passed as a washing liquid to an upstream-disposed centrifuge.

2. A process according to claim 1 characterised in that the first liquid phase issuing from the upstream-disposed centrifuge is fed to a further upstream-disposed centrifuge.

3. A process according to claim 1 or claim 2 characterised in that there are provided further centrifuges through which the first liquid phase is passed in counter-flow relationship as the washing liquid.

4. A process according to one of claims 1 to 3 characterised in that the second liquid phase is also passed as a washing liquid in counter-flow relationship through the centrifuges.

5. A process according to one of claims 1 to 4 characterised in that the second liquid phase is respectively passed into a feed for the upstream-disposed centrifuge and the first liquid phase is passed into a washing means of said centrifuge.

6. A process according to one of claims 1 to 3 characterised in that the second liquid phase is recycled into the centrifuge after the undissolved substances are separated off by means of a separating device.

## Revendications

1. Procédé de traitement par centrifugation d'une suspension contenant de l'amidon, contenant, en outre, des substances dissoutes et non dissoutes, une séparation de la suspension en un concentré riche en amidon et en une fraction pauvre en amidon étant réalisée dans une centrifugeuse, avec addition d'un liquide de lavage, caractérisé en ce que la fraction pauvre en amidon est divisée, dans la centrifugeuse, en une première phase liquide, contenant des substances dissoutes, et en une deuxième phase liquide, contenant des substances non dissoutes, la première phase liquide étant acheminée, en tant que liquide de lavage, vers une centrifugeuse située en amont.

2. Procédé selon la revendication 1, caractérisé en ce que la première phase liquide provenant de la centrifugeuse située en amont est acheminée vers une autre centrifugeuse située en amont.

3. Procédé selon la revendication 1 ou 2, caractérisé en ce que sont prévues d'autres centrifugeuses dans lesquelles est envoyée, à contre-courant, la première phase liquide, pour servir de liquide de lavage.

4. Procédé selon l'une des revendications 1 à 3, caractérisé en ce que la deuxième phase liquide est également introduite, à contre-courant, dans les centrifugeuses, pour servir de liquide de lavage.

5. Procédé selon l'une des revendications 1 à 4, caractérisé en ce que la deuxième phase liquide est envoyée, respectivement, dans une entrée de la centrifugeuse située en amont, et en ce que la première phase liquide est envoyée dans un dispositif de lavage de cette centrifugeuse.

6. Procédé selon l'une des revendications 1 à 3, caractérisé en ce que la deuxième phase liquide est réintroduite dans la centrifugeuse, après séparation des substances non dissoutes au moyen d'un dispositif séparateur.
